# EUROPEAN PATENT SPECIFICATION

(11) **EP 2 492 621 B1**
(45) Date of publication and mention of the grant of the patent: **23.10.2019**
(21) Application number: 12001188.7
(22) Date of filing: 22.02.2012
(51) Int. Cl.: F25D 23/12

(54) **Refrigerator with water purifying means**
Kühlschrank mit Wasserreinigungsmitteln
Réfrigérateur doté d'un moyen de purification d'eau

(30) Priority: 22.02.2011 KR 20110015697
(43) Date of publication of application: 29.08.2012
(73) Proprietor: LG ELECTRONICS INC., Yeongdeungpo-gu Seoul 07336 (KR)
(72) Inventor: Kim, Seongtaik, Gyeongsangnam-Do 641-711 (KR)
(74) Representative: Ter Meer Steinmeister & Partner

(56) References cited:
- EP-A2- 1 832 825
- WO-A1-2010/087538
- WO-A2-2008/017419
- DE-A1-102008 063 197

## Description

### BACKGROUND OF THE INVENTION

### 1. Field of the Invention

The present disclosure relates to a refrigerator having a water purifying means, and more particularly, to a refrigerator having a water filter for purifying supplied water.

### 2. Background of the Invention

Generally, a refrigerator for storing food items at a preset temperature is provided with a freezing chamber and a refrigerating chamber. The freezing chamber and the refrigerating chamber maintain preset temperatures by a cooling device provided in the refrigerator.

A dispenser for allowing a user to take out ice or water disposed in the refrigerator without opening a refrigerator door may be provided at the refrigerator door. The dispenser may minimize the discharge of cool air to the outside, and may enhance a user's convenience.

The refrigerator may be also provided with a water filter for filtering water supplied through the dispenser. Since the water filter is installed in the refrigerator, it is sometimes difficult to replace the water filter with a new one, and it is difficult to check whether the water filter is no longer of any use.

WO 2008/017419 A2 discloses a refrigerator according to the preamble of claim 1 and describes a refrigerator having a liquid dispenser, in turn having at least one tank, housed inside the refrigerator and containing a drinking liquid, and a metering device connected to the tank to receive the liquid, and which is user-operated to draw a given amount liquid from the refrigerator; the refrigerator having a measuring unit for measuring the level of the liquid in the tank; the processing unit for determining, as a function of the measured liquid level, information relating to the bacteria level in the liquid, and/or information relating to run-out of the liquid inside the tank, and/or information relating to wear-out of a liquid filter installed in the tank, and a user interface unit located outside the refrigerator to indicate to a user at least one of the information items determined by the processing unit.

EP 1 832 825 A2 discloses an indicator for a refrigerant filter which has a body figured to contain a replacable filter cartridge and including an openable cab to enclose the filter cartridge within the body. The indicator includes a control having a filter life determination mechanism and arranged to emit a signal when a life of a filter cartridge is determined to be expired.

WO 2010/087538 A1 discloses a refrigerator including a main body defining a refrigerator compartment and a freezer compartment, a refrigerator compartment door selectively closing the refrigerator compartment, a freezer compartment door selectively closing the freezer compartment, and a dispenser installed on a rear surface of the refrigerator compartment door to dispense drinking water through the rear surface of the refrigerator compartment door.

DE 10 2008 063 197 A1 discloses a refrigerator provided to clean water dispensed at an outlet before dispensing the refrigerator comprises an outlet, a water supply system for supplying water to the outlet, and a water cleaning filter installed in the outlet to clean the water before being dispensed.

### SUMMARY OF THE INVENTION

Therefore, an aspect of the detailed description is to provide a refrigerator with a water purifying means capable of easily replacing a water filter.

Another aspect of the detailed description is to provide a refrigerator with a water purifying means capable of allowing a user to easily check a lifespan of a water filter.

To achieve these and other advantages and in accordance with the purpose of this specification, as embodied and broadly described herein, there is provided a refrigerator according to claims 1 - 6.

The present disclosure has severaal advantages.

Firstly, the water filter may be mounted to the refrigerator door in a state of being partially exposed outside the refrigerator door. This allows a user to easily replace the water filter without disassembling the refrigerator.

Secondly, the lifespan of the water filter may be easily checked. This allows a user to determine whether or not to replace the water filter or not in a more convenience and precise manner.

Thirdly, the water filter may serve as a means for selecting water or ice to be supplied through the dispenser. This may allow a user to manipulate the refrigerator in a more intuitive manner, and to simplify a manipulation panel provided at the refrigerator door.

Further scope of applicability of the present application will become more apparent from the detailed description given hereinafter.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a perspective view of a refrigerator with a water purifying means according to a first embodiment of the present disclosure;
FIGS. 2A and 2B are enlarged perspective views of a water purifying means according to the first embodiment of the present disclosure;
FIG. 3 is a sectional view taken along line 'III-IIIA' in FIG. 2A;
FIG. 4 is a block diagram schematically showing a configuration of a first filter lifespan display unit according to the first embodiment of the present disclosure;
FIG. 5 is a flowchart showing an operation of the first filter lifespan display unit of FIG. 4;
FIGS. 6 and 7 are perspective views of a refrigerator with a water purifying means according to a second embodiment of the present disclosure;
FIG. 8 is a sectional view taken along line VIII-VIii in FIG. 7;
FIG. 9 is a block diagram schematically showing a configuration of a second filter lifespan display unit according to the second embodiment of the present disclosure;
FIG. 10 is a perspective view showing a modification example of the second embodiment;
FIG. 11 is a perspective view showing another modification example of the second embodiment;
FIG. 12 is a perspective view of a refrigerator with a water purifying means according to a third embodiment disclosing the invention;
FIG. 13 is a sectional view taken along line XIII-XIII in FIG. 12; and
FIG. 14 is a block diagram schematically showing a configuration of a third filter lifespan display unit according to the third embodiment disclosing the invention.

### DETAILED DESCRIPTION OF THE INVENTION

Description will now be given in detail of the exemplary embodiments, with reference to the accompanying drawings. For the sake of brief description with reference to the drawings, the same or equivalent components will be provided with the same reference numbers, and description thereof will not be repeated.

Hereinafter, a refrigerator with a water purifying means according to the present disclosure will be explained in more detail with reference to the attached drawings.

### -First Embodiment

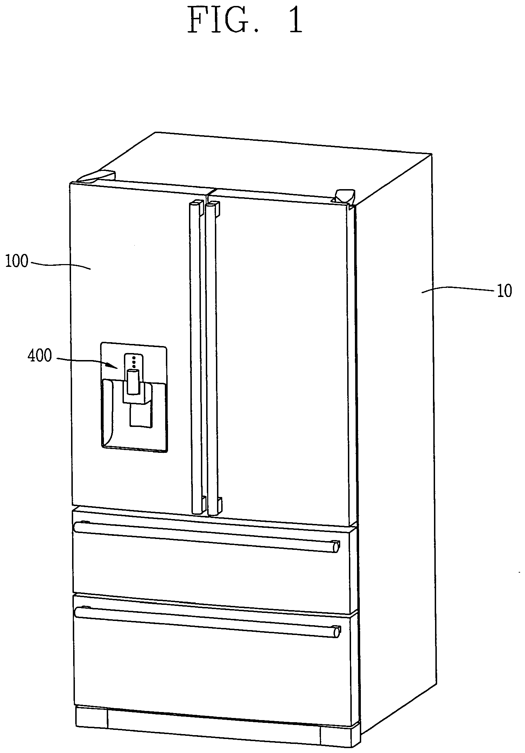

Referring to FIGS. 1, 2A, 2B and 3, a refrigerator according to a first embodiment of the present disclosure comprises a refrigerator door 100 configured to open and close a refrigerator body 10, and a water purifying means 400 detachably installed at the refrigerator door 100. The refrigerator door 100 includes two upper doors hinge-coupled to the refrigerator body 10, and two drawer-type doors provided at a lower side. However, the present disclosure is not limited to this arrangement. For instance, two doors hinge-coupled to the refrigerator body may be arranged up and down, or right and left.

The water purifying means 400 is disposed on a front surface of the refrigerator door 100, and more specificallyspecifically, at an upper part of a take-out opening 210 of a dispenser 200. Although not shown, an ice making chamber for making ice is installed on a rear surface of the refrigerator door 100. Ice made in the ice making chamber may be transferred by an ice transfer device such as an auger, and then may be dispensed through the take-out opening 210. The auger is operated by manipulation of buttons 220 of the dispenser 200. An ice supply pipe 230 is provided between the ice making chamber and the take-out opening 210, through which ice having been transferred from the ice making chamber is transmitted to the take-out opening 210.

A water supply passage 110 connected to a water storage unit (not shown) is installed at the refrigerator door 100, and is configured to supply water rather than ice. The water supply passage 110 includes a water inflow passage 111 extending between a water storage unit and the water filter 420, and a water discharge passage 112 extending between the water filter 420 and a water supply opening.

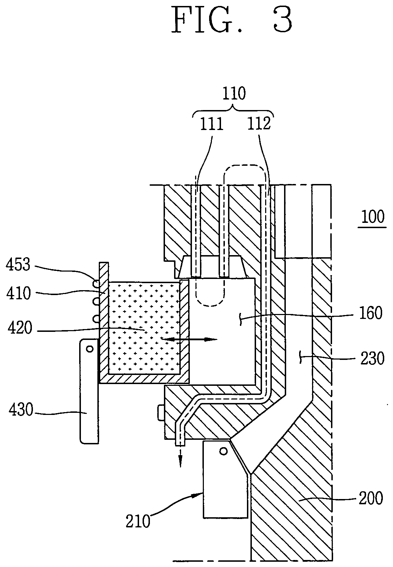

A filter installation unit 160 is formed at the refrigerator door 100. A first case 410 of the water purifying means is detachably inserted in the filter installation unit 160. As shown in FIG. 3, the water supply passage 110 is installed in the filter installation unit 160. A water filter 420 configured to filter supplied water is provided at the first case 410.

Referring to FIG. 3, an inner space of the first case 410 constitutes part of the water supply passage 110. Water supplied through the water supply passage 110 may pass through the water filter 420, and then may be discharged from the first case 410 to be supplied to a user.

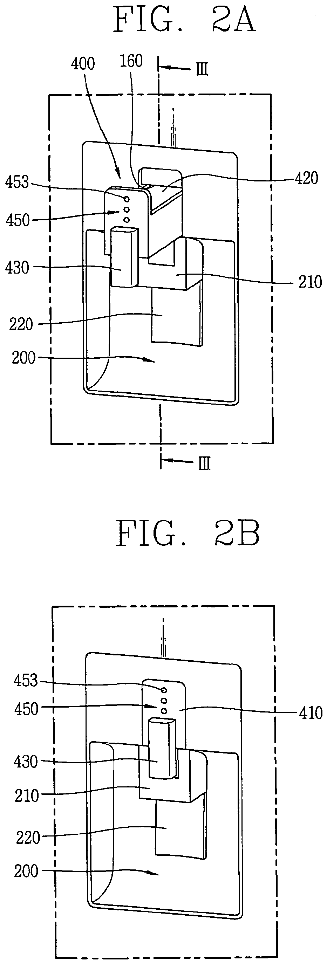

The filter installation unit 160 is formed above the take-out opening 210 of the dispenser 200, and the first case 410 has a rectangular parallelepiped shape with an open upper surface. As shown in FIGS. 2A and 2B, the water purifying means 400 may be detachably mounted in the filter installation unit 160. More specifically, the water purifying means 400 may be pushed into the filter installation unit 160 for mounting, and may be withdrawn from the filter installation unit 160 for separation. This may allow a user to easily replace or check the water filter 420 without dissembling the refrigerator door 100.

Water purified by the water purifying means 400 may be discharged from the first case 410, and then may be supplied through an additional water outlet. Referring to FIG. 3, water may be supplied through a water supply unit 430 provided on a front surface of the first case 410. More specifically, in the present disclosure, the inner space of the first case 410 communicatess with the water supply unit 430 so that water filtered by the water filter 420 may be supplied through the water supply unit 430.

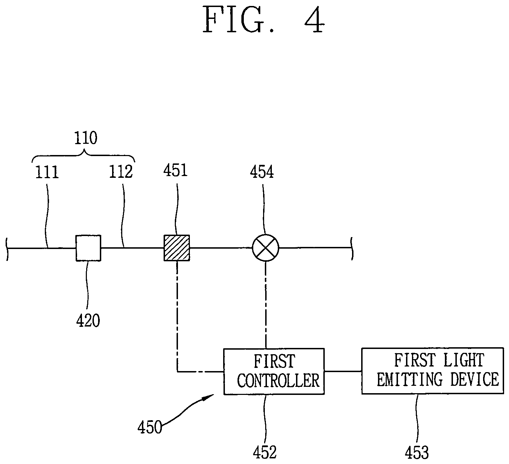

Referring to FIG. 4, the water purifying means 400 is further provided with a first filter lifespan display unit 450. The first filter lifespan display unit 450 includes a first flow amount measuring unit 451, a first controller 452, and a display unit. The first flow amount measuring unit 451 is installed at the water supply passage 110, and is configured to measure an accumulated flow amount of water having passed through the water filter 420. The first controller 452 is configured to compare the measured accumulated flow amount with a preset reference flow amount. The display unit is electrically connected to the first controller 452, and includes a first light emitting device 453 that is turned on according to a comparison result. The first controller 452 is configured to control an operation of a first valve 454 for opening and closing the water supply passage 110.

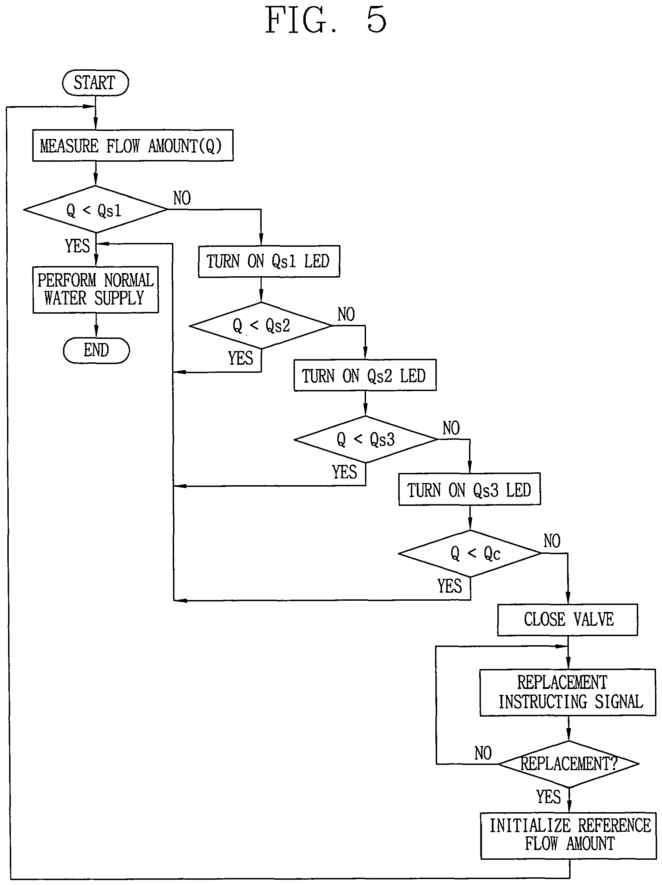

FIG. 5 is a flowchart showing an operation of the first filter lifespan display unit of FIG. 4.

Referring to FIG. 5, when water supply and water purification are performed, the first flow amount measuring unit 451 measures an accumulated flow amount (Q) discharged out via the water filter 420 on the water supply passage 110, and transmits the measured accumulated flow amount (Q) to the first controller 452. First to third reference flow amounts and a limit flow amount preset according to the lifespan of the water filter are stored in the first controller 452. Here, the limit flow amount denotes a flow amount which can be supplied until the water filter is no longer of any use. The first to third reference flow amounts are set to be smaller than the limit flow amount.

The first controller 452 compares the measured accumulated flow amount with the first reference flow amount. If the measured accumulated flow amount is smaller than the first reference flow amount, the first controller 452 controls the first valve 452 to maintain an open state for normal water supply. On the other hand, if the measured accumulated flow amount is larger than the first reference flow amount, the first controller 452 controls the first light emitting device 453 to be turned on for display of a used degree of the water filter, and compares the measured accumulated flow amount with the second reference flow amount. If the measured accumulated flow amount is smaller than the second reference flow amount, the first controller 452 controls water supply to be normally performed. On the other hand, if the measured accumulated flow amount is larger than the second reference flow amount, the first controller 452 controls a second light emitting device to be turned on, and compares the measured accumulated flow amount with the third reference flow amount. If the measured accumulated flow amount is smaller than the third reference flow amount, the first controller 452 controls water supply to be normally performed. On the other hand, if the measured accumulated flow amount is larger than the third reference flow amount, the first controller 452 controls a third light emitting device to be turned on, and determines whether the measured accumulated flow amount has reached the limit flow amount. If the measured accumulated flow amount has reached the limit flow amount, the first controller 452 closes the first valve 454 to block a water discharge passage. The first controller 452 may send a filter replacement signal to the outside through an alarm generator or an additional LED.

Upon detection of replacement of the water filter 420 having reached the limit flow amount by another one, the first controller 452 initializes the accumulated flow amount. Referring to FIG. 5, 'Q' denotes a measured flow amount, 'Qs1' denotes a first reference flow amount, 'Qs2 denotes a second reference flow amount, 'Qs3' denotes a third reference flow amount, 'Qc' denotes a limit flow amount, 'Qs1 LED' denotes a first light emitting diode, 'Qs2 LED' denotes a second light emitting diode, and 'Qs3 LED' denotes a third light emitting diode.

### -Second Embodiment

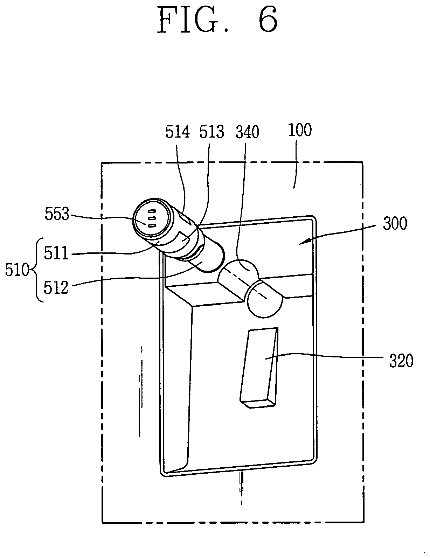

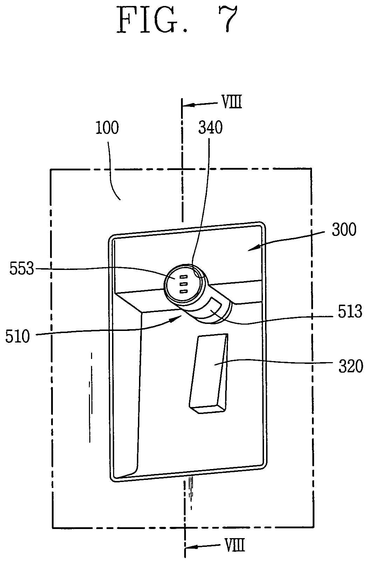

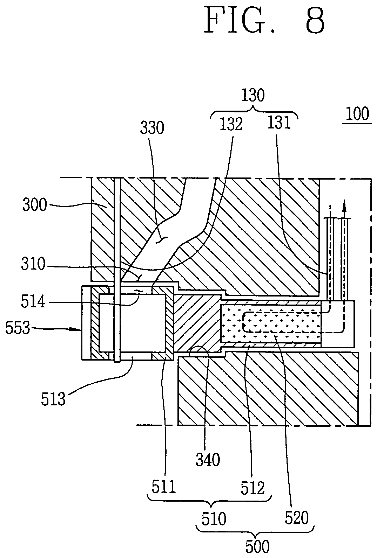

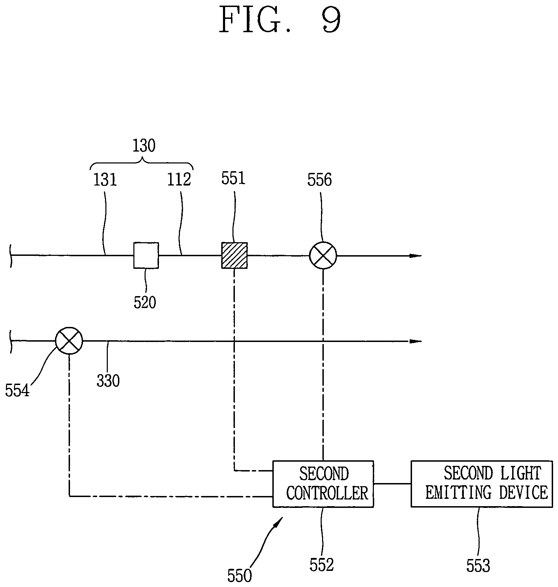

Referring to FIGS. 6 to 9, a water purifying means 500 according to a second embodiment of the present disclosure is installed on a front surface of a refrigerator door 100, and is detachably mounted to a dispenser 300 installed on the front surface of the refrigerator door 100.

A water supply passage 130 is formed at the refrigerator door 100 and is configured to connect a water storage unit to a water supply opening 513. An ice supply pipe 330 is also formed at the refrigerator door 100 and is configured to connect an ice making chamber to an ice take-out opening 310.

A filter installation unit 340 is formed at the dispenser 300 so as to extend inwardly from the front surface of the refrigerator door 100. An inner space of the filter installation unit 340 communicates with the water supply passage 130.

The water purifying means 500 includes a second case 510, and a second water filter 520 fitted into the second case 510. The second case 510 is formed in a cylindrical shape, and includes a water supply region 511 and a filter region 512. The filter region 512 is configured to fit the second water filter 520 therein, and the water supply region 511 is a region where a connection opening 514 and the water supply opening 513 facing the ice take-out opening 310 of the ice supply pipe 330 are formed.

The filter region 512 is connected to the water supply passage 130 by being fitted into the filter installation unit 340, and the water supply region 511 is exposed outside the filter installation unit 340.

Water supplied through the water supply passage 130 is discharged to the outside, through the water supply opening 513 of the water supply region 511 via the second water filter 520 inside the filter region 512. Ice having been transferred along the ice supply pipe 330 from the ice making chamber is dispensed to the outside through the ice take-out opening 310, the connection opening 514 and the water supply opening 513.

A water/ice selection button (not shown) may be installed at the refrigerator door 100, and a signal generated by manipulation of the water/ice selection button is transmitted to a second controller 552. The the signal transmitted to the second controller 552 is used to control a first opening/closing valve 556 installed on the water supply passage 130, or a second opening/closing valve 554 installed on the ice supply pipe 330. More specifically, once the first opening/closing valve 556 is open, water purified by the water purifying means 500 is supplied. On the other hand, once the second opening/closing valve 554 is open, ice stored in the ice making chamber is supplied.

Since the water supply region 511 of the second case 510 is exposed outside the dispenser 300, the water supply region 511 may serve as a handle. This may allow the water purifying means 500 to be easily detachably mounted to the dispenser 300.

Like in the first embodiment, a filter lifespan display unit is provided in the second embodiment. The second filter lifespan display unit 550 includes a second flow amount measuring unit 551, a second controller 552, and a display unit. The second flow amount measuring unit 551 is installed at the water supply passage 130, and is configured to measure an accumulated flow amount of water having passed through the second water filter 520. The second controller 552 is configured to compare the measured accumulated flow amount with a preset reference flow amount. The display unit is turned on according to a comparison result by the second controller 552. The second flow amount measuring unit 551 may be installed in the second case 510.

The second filter lifespan display unit 550 includes a second light emitting device 553, which may include three light emitting devices, installed at one end of the second case 510. However, the present disclosure is not limited to this. More specifically, the second filter lifespan display unit 550 may include a light emitting bar having a lighting length variable according to a remaining lifespan of the water filter, or a light emitting panel for displaying a number corresponding to a remaining lifespan of the water filter.

The second light emitting device 553 may be installed on an outer circumference of the second case 510, as well as at the end of the second case 510. The number of the light emitting devices may be changed.

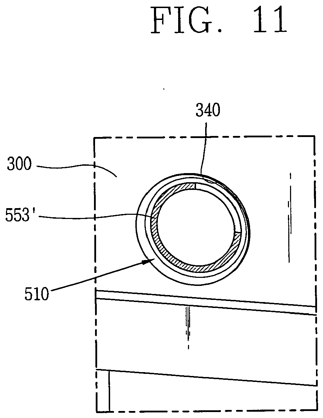

As shown in FIG. 11, the second filter lifespan display unit 550 may include a light emitting bar 553' disposed in a circular shape along the outer circumference of the second case 510. The operation of the second filter lifespan display unit 550 may be understood with reference to that of the first filter lifespan display unit, and thus its detailed explanations will be omitted.

The water supply passage 130 includes a water inflow passage 131 extending between a water storage unit and the second water filter 520, and a water discharge passage 132 extending between the second water filter 520 and the water supply opening 513. Part of the water discharge passage 132 is disposed in the second case 510. As aforementioned, the first opening/closing valve 556 is installed on the water supply passage 130. Water or ice may be supplied through the dispenser. Here, the ice may be supplied in the form of cubic ice, or ice pieces crushed by a cutter (not shown). A manipulation means for selecting water or ice to be supplied through the dispenser may be provided. This may be implemented by the second case 510. More specifically, the second case may be provided with buttons for selecting water, cubic ice, and ice pieces, respectively. The buttons may be provided at the end or outer circumference of the second case.

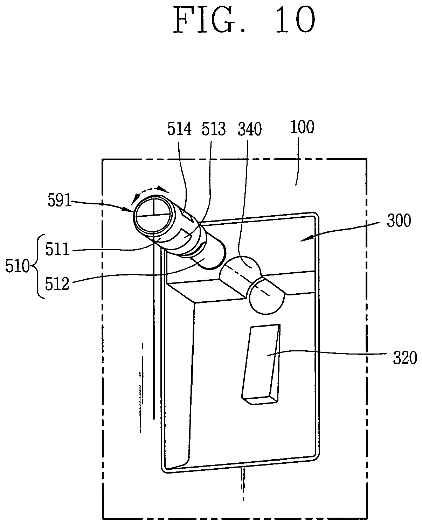

As shown in FIG. 10, water or ice may be selected by changing the position of the second case 510. That is, a selection region 591 for selecting water, cubic ice and ice pieces may be provided at one end of the second case 510. Under this configuration, once the second case has rotated, an object corresponding to a direction of 12 o'clock (one selected from water, cubic ice and ice pieces) is dispensed. More specifically, referring to FIG. 10, the end of the second case 510 is divided into three regions. Here, an object corresponding to a region facing an upper part of the filter installation unit 340 is dispensed. This may simplify a manipulation means, and may allow a user to select water or ice in a more intuitive manner. The regions may be provided with information on water, cubic ice and ice pieces. This information may be displayed in the form of characters, numbers, symbols, diagrams, etc.

A detection means (not shown) for detecting the position of the second case 510 is installed in the filter installation unit 340.

### -Third Embodiment

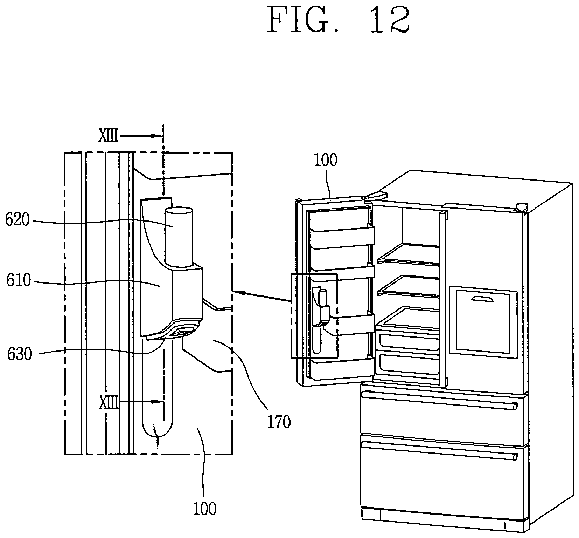

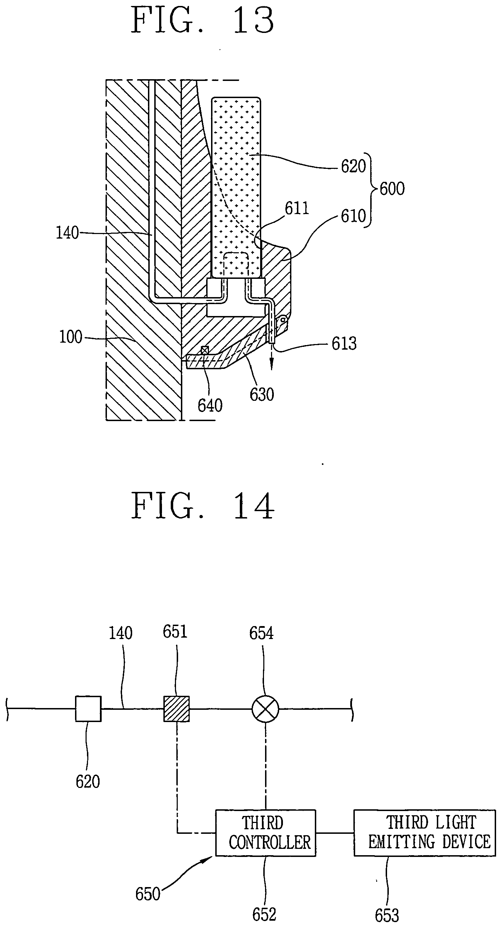

Referring to FIGS. 12 to 14, the third embodiment disclosing the present invention will be explained. A water purifying means 600 according to the third embodiment of the present disclosure may be installed on a rear surface of a refrigerator door 100. More specifically, the water purifying means 600 may be installed on a lateral side of a door basket 170 installed on the rear surface of the refrigerator door 100. A water supply passage 140 extending between a water storage unit and a water supply opening 613 is disposed at the refrigerator door 100.

The water purifying means 600 is installed on the lateral side of the rear surface of the refrigerator door 100, and includes a third case 610. The third case 610 has an open upper end, and has an inner space connected to the water supply passage 140. A third water filter 620 is detachably mounted at the inner space of the third case 610. The third case 610 is provided with a water supply opening 611 extending downwardly.

A water supply button 630 is installed at a lower end of the third case 610, and is hinge-connected to one end of the third case 610. A water supply switch 640 is installed on a rear surface of the water supply button 630, and is configured to transmit a signal to a third controller 652 upon detection of pressing of the water supply button 630. A third valve 654 is installed on the water supply passage 140, and is configured to open and close the water supply passage 140 according to whether the water supply switch 640 has generated a signal.

The third water filter 620 is fitted into the inner space of the third case 610 in an upright state, and is partially exposed to the outside. Due to installation on the rear surface of the refrigerator door 100, the water purifying means 600 is substantially disposed at an inner space of a refrigerator body. The water supply passage 140 connected to the inside of the third water filter 620 and the third case 610 maintains its temperature to be equal to a temperature of the inner space of the refrigerator. As a result, water supplied through the water supply opening 611 may maintain its temperature to be lower than room temperature.

The water purifying means 600 of the third embodiment may be provided with a third filter lifespan display unit 650. The third filter lifespan display unit 650 may be installed on a front surface of the refrigerator door 100, or on the surface of the third case 610.

The third filter lifespan display unit 650 according to the third embodiment includes a third flow amount measuring unit 651, a third controller 652, and third light emitting device 653 including a plurality of light emitting device. The third flow amount measuring unit 651 is configured to measure an
accumulated flow amount of water having passed through the third water filter 620. The third controller 652 is configured to compare the measured accumulated flow amount with a preset reference flow amount. The third light emitting devices 653 are turned on according to a comparison result by the third controller 652. The third light emitting devices 653 may be installed on the front surface of the refrigerator door 100, or on the surface of the third case 610.

The operation of the third filter lifespan display unit 650 may be understood with reference to that of the first filter lifespan display unit 450, and thus its detailed explanations will be omitted.

## Claims

1. A refrigerator with a water purifying means (600), the refrigerator comprising:
a refrigerator door (100) having a water supply passage (140) along which water is supplied outside the refrigerator;
a case (610) detachably mounted to the refrigerator door (100) such that at least part thereof is exposed outside the refrigerator door (100);
a water filter (620) mounted to the case (610), and disposed at the refrigerator door (100) such that water supplied along the water supply passage (140) passes therethrough; and
a filter lifespan display unit (650) configured to display a remaining lifespan of the water filter (620),
wherein the case (610) is installed on a rear surface of the refrigerator door (100) so as to be exposed to an inner space of the refrigerator, the case (610) having an open upper end,
**characterized in that** part of the water filter (620) is inserted into the open upper end of the case (610) to be partially disposed to the outside,
an inner space of the case is connected to the water supply passage (140) and,
the case (610) is provided with a water supply opening (611) extending downwardly,
a water supply button (630) is installed at a lower end of the case (610), and
a water supply switch (640) is installed on a rear surface of the water supply button (630)

2. The refrigerator of claim 1, **characterized in that** the case (610) is detachably mounted to a filter installation unit of the refrigerator door (100), and includes a water supply unit for discharging out water having passed through the water filter (620).

3. The refrigerator of claim 1 or 2, **characterized in that** the water filter (620) is disposed at an outlet of the water supply passage (140).

4. The refrigerator of any one of the preceding claims, **characterized in that** the filter lifespan display unit (650) is provided at the case (610).

5. The refrigerator of claim 4, **characterized in that** the filter lifespan display unit (650) includes:
a flow amount measuring unit (651) configured to measure an accumulated flow amount of water having passed through the water filter (620);
a controller (652) configured to compare the measured accumulated flow amount with a preset reference flow amount, and to determine whether the water filter (620) is any longer of no use; and
a display unit turned on according to a comparison result by the controller (652).

6. The refrigerator of claim 5, **characterized in that** the display unit includes a plurality of light emitting devices (653), and the light emitting devices are disposed on the surface of the case (610).

## Patentansprüche

1. Kühlschrank mit Wasserreinigungsmitteln (600), wobei der Kühlschrank Folgendes umfasst:
eine Kühlschranktür (100), die einen Wasserzufuhrdurchgang (140) aufweist, längs dessen Wasser der Außenseite des Kühlschranks zugeführt wird;
ein Gehäuse (610), das an der Kühlschranktür (100) abnehmbar so angebracht ist, dass wenigstens ein Teil davon zur Außenseite der Kühlschranktür (100) freiliegt;
einen Wasserfilter (620), der an dem Gehäuse (610) angebracht ist und so an der Kühlschranktür (100) angeordnet ist, dass Wasser, das längs des Wasserzufuhrdurchgangs (140) zugeführt wird, dort durch ihn gelangt; und
eine Filterlebensdauer-Anzeigeeinheit (650), die konfiguriert ist, eine verbleibende Lebensdauer des Wasserfilters (620) anzuzeigen,
wobei das Gehäuse (610) an einer hinteren Oberfläche der Kühlschranktür (100) so eingebaut ist, dass es zu einem Innenraum des Kühlschranks freiliegt, wobei das Gehäuse (610) ein offenes oberes Ende aufweist,
**dadurch gekennzeichnet, dass** ein Teil des Wasserfilters (620) so in das offene obere Ende des Gehäuses (610) eingesetzt wird, dass es teilweise an der Außenseite angeordnet ist,
ein Innenraum des Gehäuses mit dem Wasserzufuhrdurchgang (140) verbunden ist,
das Gehäuse (610) mit einer Wasserzufuhröffnung (611) versehen ist, die sich abwärts erstreckt,
eine Wasserzufuhrtaste (630) an einem unteren Ende des Gehäuses (610) eingebaut ist, und
ein Wasserzufuhrschalter (640) an einer hinteren Oberfläche der Wasserzufuhrtaste (630) eingebaut ist.

2. Kühlschrank nach Anspruch 1, **dadurch gekennzeichnet, dass** das Gehäuse (610) an einer Filtereinbaueinheit der Kühlschranktür (100) abnehmbar angebracht ist und eine Wasserzufuhreinheit zum Abführen von Wasser, das durch den Wasserfilter (620) gelangt ist, nach außen umfasst.

3. Kühlschrank nach Anspruch 1 oder 2, **dadurch gekennzeichnet, dass** der Wasserfilter (620) an einem Auslass des Wasserzufuhrdurchgangs (140) angeordnet ist.

4. Kühlschrank nach einem der vorhergehenden Ansprüche, **dadurch gekennzeichnet, dass** die Filterlebensdauer-Anzeigeeinheit (650) an dem Gehäuse (610) vorgesehen ist.

5. Kühlschrank nach Anspruch 4, **dadurch gekennzeichnet, dass** die Filterlebensdauer-Anzeigeeinheit (650) Folgendes umfasst:
eine Durchflussmengen-Messeinheit (651), die konfiguriert ist, eine aufsummierte Durchflussmenge von Wasser, das durch den Wasserfilter (620) gelangt ist, zu messen;
eine Steuerung (652), die konfiguriert ist, die gemessene aufsummierte Durchflussmenge mit einer voreingestellten Solldurchflussmenge zu vergleichen und festzustellen, ob der Wasserfilter (620) nicht mehr einsatzfähig ist; und
eine Anzeigeeinheit, die durch die Steuerung (652) in Übereinstimmung mit einem Vergleichsergebnis eingeschaltet wird.

6. Kühlschrank nach Anspruch 5, **dadurch gekennzeichnet, dass** die Anzeigeeinheit mehrere Leuchtvorrichtungen (653) umfasst und dass die Leuchtvorrichtungen an der Oberfläche des Gehäuses (610) angeordnet sind.

## Revendications

1. Réfrigérateur avec un moyen de purification d'eau (600), le réfrigérateur comprenant :
une porte de réfrigérateur (100) ayant un passage d'alimentation en eau (140) le long duquel de l'eau est fournie à l'extérieur du réfrigérateur ;
un boîtier (610) monté de manière amovible sur la porte de réfrigérateur (100) de sorte qu'au moins une partie de celui-ci soit exposée à l'extérieur de la porte de réfrigérateur (100) ;
un filtre à eau (620) monté sur le boîtier (610), et disposé sur la porte du réfrigérateur (100) de telle sorte que l'eau fournie le long du passage d'alimentation en eau (140) passe à travers celui-ci ; et
une unité d'affichage de la durée de vie du filtre (650) configurée pour afficher une durée de vie restante du filtre à eau (620),
dans lequel le boîtier (610) est installé sur une surface arrière de la porte (100) du réfrigérateur de manière à être exposé à un espace intérieur du réfrigérateur, le boîtier (610) présentant une extrémité supérieure ouverte,
**caractérisé en ce qu'**une partie du filtre à eau (620) est insérée dans l'extrémité supérieure ouverte du boîtier (610), pour être partiellement disposée vers l'extérieur,
un espace intérieur du boîtier est relié au passage d'alimentation en eau (140) ; et
le boîtier (610) est doté d'une ouverture d'alimentation en eau (611) s'étendant vers le bas,
une touche d'alimentation en eau (630) est installée à une extrémité inférieure du boîtier (610), et
un commutateur d'alimentation en eau (640) est installé sur une surface arrière de la touche d'alimentation en eau (630).

2. Réfrigérateur selon la revendication 1, **caractérisé en ce que** le boîtier (610) est monté de manière amovible sur une unité d'installation de filtre de la porte du réfrigérateur (100), et comprend une unité d'alimentation en eau pour évacuer l'eau qui est passée à travers le filtre (620).

3. Réfrigérateur selon la revendication 1 ou 2, **caractérisé en ce que** le filtre à eau (620) est disposé à une sortie du passage d'alimentation en eau (140).

4. Réfrigérateur selon l'une quelconque des revendications précédentes, **caractérisé en ce que** l'unité d'affichage de la durée de vie du filtre (650) est prévue sur le boîtier (610).

5. Réfrigérateur selon la revendication 4, **caractérisé en ce que** l'unité d'affichage de la durée de vie du filtre (650) comprend :
une unité de mesure de débit quantitatif (651) configurée pour mesurer un débit quantitatif cumulé qui est passé à travers le filtre à eau (620) ;
un contrôleur (652) configuré pour comparer le débit quantitatif cumulé mesuré avec un débit quantitatif de référence prédéfini et pour déterminer si le filtre à eau (620) ne sert plus à rien ; et
une unité d'affichage allumée en fonction d'un résultat de comparaison par le contrôleur (652).

6. Réfrigérateur selon la revendication 5, **caractérisé en ce que** l'unité d'affichage comprend une pluralité de dispositifs émetteurs de lumière (653), et les dispositifs émetteurs de lumière sont disposés sur la surface du boîtier (610).
